(19) Europäisches Patentamt
European Patent Office
Office européen des brevets

(11) Veröffentlichungsnummer: **0 559 021 B1**

# (12) EUROPÄISCHE PATENTSCHRIFT

(45) Veröffentlichungstag der Patentschrift: **25.10.95**

(51) Int. Cl.$^6$: **B01D 53/56**, B01J 37/02, B01J 29/06, B01J 29/24

(21) Anmeldenummer: **93102637.1**

(22) Anmeldetag: **19.02.93**

---

(54) **NOx-Verminderung im mageren Abgas von Kraftfahrzeugmotoren.**

---

(30) Priorität: **04.03.92 DE 4206699**

(43) Veröffentlichungstag der Anmeldung:
**08.09.93 Patentblatt 93/36**

(45) Bekanntmachung des Hinweises auf die
Patenterteilung:
**25.10.95 Patentblatt 95/43**

(84) Benannte Vertragsstaaten:
**AT BE CH DE DK ES FR GB GR IT LI NL PT SE**

(56) Entgegenhaltungen:
**EP-A- 0 054 472**
**EP-A- 0 149 966**
**EP-A- 0 376 025**
**EP-A- 0 485 180**
**WO-A-90/00441**

**DATABASE WPI Section Ch, Week 8926, Derwent Publications Ltd., London, GB; Class H06, AN 89-188667 & JP-A-1 127 044 (TOYOTA CENT RES & DEV) 19. Mai 1989**

**DATABASE WPI Section Ch, Week 8928, Derwent Publications Ltd., London, GB; Class H06, AN 89-201843 & JP-A-1 139 144 (TOYOTA JIDOSHA KK) 31.Mai 1989**

(73) Patentinhaber: **Degussa Aktiengesellschaft**
**Weissfrauenstrasse 9**
**D-60311 Frankturt (DE)**

(72) Erfinder: **Leyrer, Jürgen, Dr.**
**Im Vogelsang 5**
**W-8755 Alzenau (DE)**
Erfinder: **Lox, Egbert, Dr.**
**Grünaustrasse 9**
**W-6450 Hanau 9 (DE)**
Erfinder: **Engler, Bernd, Dr.**
**Treuener Strasse 2**
**W-6450 Hanau 9 (DE)**

---

Rank Xerox (UK) Business Services
(3.10/3.09/3.3.3)

**Beschreibung**

Die Erfindung betrifft einen Katalysator zur Stickoxidverminderung im mageren Abgas von Kraftfahrzeugmotoren. Der Katalysator enthält auf einem inerten strukturverstärkenden Körper eine erste katalytische Beschichtung aus einer Mischung eines hochoberflächigen, gegebenenfalls mit Seltenen Erdmetallen und/oder Siliziumdioxid, stabilisierten Aluminiumoxids und/oder eines Ceroxids als Träger für die katalytisch aktiven Edelmetallkomponenten und auf der ersten Schicht eine zweite katalytische Beschichtung aus einem Zeolithen.

Die Emission der Schadstoffe Kohlenmonoxid, Kohlenwasserstoffe und Stickoxide bei Otto-Motoren konnte in den letzten Jahren durch den Einsatz von geregelten sogenannten Dreiweg-Katalysatoren drastisch verringert werden. Dreiweg-Katalysatoren sind in der Lage, Kohlenmonoxid und Kohlenwasserstoffe zu den unschädlichen Verbindungen Kohlendioxid und Wasser zu oxidieren und gleichzeitig Stickoxide zu molekularem Stickstoff zu reduzieren (siehe z.B. DE-C 38 30 318). Voraussetzung für die einwandfreie Funktion der Dreiweg-Katalysatoren ist das Vorliegen eines stöchiometrischen Verhältnisses der im Abgas enthaltenen reduzierenden und oxidierenden Komponenten. Dieses optimale Verhältnis ist dann gegeben, wenn die sogenannte Luftzahl Lambda im Abgas gleich eins ist.

Die Luftzahl Lambda kann z. B. mit der Brettschneider Formel (J. Brettschneider, Bosch Techn. Berichte 6 (1979) 177) aus den verschiedenen Anteilen des Abgases berechnet werden.

Unter realen Fahrbedingungen muß die Luftzahl bei Dreiweg-Katalysatoren durch eine Lambda-Regelung ständig auf den Wert 1 nachgeregelt werden. Dazu wird die Sauerstoff-Konzentration im Abgas mit einer Lambda-Sonde gemessen und das Luft-Kraftstoffverhältnis am Ansaugstutzen des Motors so geregelt, daß die Luftzahl im Abgas gleich eins wird.

Bei Diesel- und sogenannten (Otto-)Magermotoren kann dieses Prinzp zur Abgasreinigung nicht eingesetzt werden. Diese Motoren arbeiten stets bei einem hohen Sauerstoff-Überschuß, der im Abgas zu Luftzahlen größer als eins führt (Lambda > 1).

Zur Abgasreinigung von Diesel- und Magermotoren wurden aus diesem Grunde "Dieseloxidationskatalysatoren", wie zum Beispiel in DE-C-39 40 758 beschrieben, entwickelt. Diese Katalysatoren zeigen hohe Umsatzraten bezüglich der Oxidation von Kohlenmonoxid und Kohlenwasserstoffen, verändern aber nicht den Stickoxidgehalt im Abgas. Eine Verminderung der Stickoxide durch Reduktion ist mit diesen Katalysatoren wegen des hohen Sauerstoffanteils im Abgas schwierig.

In DE-A-36 35 284 ist die Umsetzung von Stickoxiden mittels Ammoniak beschrieben. An mobilen Emissionsquellen ist ein derartiges Verfahren nur sehr schwer einsetzbar, da ein zusätzlicher Behälter für $NH_3$ und eine aufwendige Dosiereinrichtung notwendig werden. Außerdem erscheint es aus Sicherheitsgründen nicht geboten zu sein, Ammoniak in Fahrzeugen mitzuführen.

Weiterhin kann es bei diesem System durch überstöchiometrische Dosierung zu Sekundäremissionen von nicht umgesetztem Ammoniak kommen (Ammoniak-Schlupf). Die für hohe Umsetzraten der Stickoxide benötigten Temperaturen liegen bei diesem Verfahren oberhalb von 400° C.

In JP-A-1127044 wird eine Katalysatorbeschichtung beschrieben, die sowohl das im Abgas enthaltene Kohlenmonoxid und die Kohlenwasserstoffe oxidieren kann als auch die Stickoxide trotz der oxidierenden Abgasbedingungen weitgehend zu Stickstoff zu reduzieren vermag.

Es handelt sich dabei um eine Zweifachbeschichtung aus einer ersten katalytischen Schicht für die Katalyse von Oxidationsreaktionen und einer darauf aufgebrachten zweiten Schicht aus Zeolith. Auf diese Schicht wird in einem weiteren Schritt Kupfer als aktive Komponente aufgebracht.

Die erste Schicht kann aus Aluminiumoxid und einem Oxid eines Selten Erdmetalles, z. B. Ceroxid, bestehen und ist mit einem oder mehreren Metallen aus der Gruppe Platin, Palladium und Rhodium imprägniert. Nach dem Imprägnieren der ersten Schicht mit den Edelmetallen wird die zweite Schicht bestehend aus Zeolith und Sillca-Gel aufgebracht. Erst danach erfolgt die Beladung mit Kupfer durch Eintauchen der gesamten Katalysatorvorstufe in eine wäßrige Kupferacetatlösung für die Dauer von 24 Stunden.

Dieser aus dem Stand der Technik bekannte Katalysator konvertiert zwar bei Abgastemperaturen von 500 bis 600° C, den Schadstoff $NO_x$. Diese Temperaturen liegen jedoch wesentlich höher als die im Abgas von insbesondere Dieselmotoren typischerweise auftretenden Temperaturen von 225 bis 400° C. Daten für den bei Dieselmotoren relevanten Abgastemperaturbereich von 225 bis 400° C sind in der JP-A-1127044 nicht dargestellt. Überdies wird durch die nachträgliche Imprägnierung des gesamten Trägers nicht gewährleistet, daß Kupfer nur auf dem Zeolithen und nicht auch auf dem Aluminiumoxid abgeschieden wird. Dies zeigt auch die in der Offenlegungsschrift angegebene Menge Kupfer von 20 g pro Liter Trägervolumen. Diese Menge ist extrem hoch. Sie überschreitet die maximale Austauschkapazität des Zeolithen. Zudem erscheint eine homogene Verteilung des Kupfers über den Monolithen, insbesondere in den Kanälen des Wabenkörpers durch diesen Verfahrensschritt nicht gewährleistet zu sein.

Außerdem ist die Imprägnierung des Zeolithen mit Kupfer sehr aufwendig und zeitraubend (lt. Offenlegungsschrift 24 h).

Es ist Aufgabe der vorliegenden Erfindung, einen Katalysator für die Stickoxidverminderung im mageren Abgas von Kraftfahrzeugmotoren anzugeben, der schon bei Abgastemperaturen von 225° C vergleichsweise hohe Konversionsraten für die Schadstoffe Kohlenmonoxid und Kohlenwasserstoffe sowie für Stickoxide aufweist und sich einfach und rationell fertigen läßt.

Diese Aufgabe wird durch einen Katalysator mit zwei katalytisch aktiven Schichten gemäß dem Oberbegriff von Anspruch 1 gelöst. Der Katalysator ist dadurch gekennzeichnet, daß die Edelmetallkomponenten der ersten katalytischen Schicht Iridium und Platin im Gewichtsverhältnis von 1 : 10 bis 10 : 1, bevorzugt jedoch 1 : 2 sind und daß es sich bei dem Zeolithen um einen Kupfer und/oder Eisen enthaltenden, temperaturstabilen Zeolithen vom Mordenit-Typ handelt.

Der erfindungsgemäße Katalysator zeichnet sich durch besonders hohe Konversionsraten für die Schadstoffe schon bei Temperaturen von 225 bis 400° C aus und kann daher vorteilhaft für die Abgasreinigung von Dieselmotoren eingesetzt werden. Er ist in der Lage, Stickoxide zu Stickstoff zu reduzieren, selbst bei den bei Dieselabgasen und den Abgasen von mager betriebenen Ottomotoren vorliegenden hohen Sauerstoffgehalten. Diese vorteilhafte Wirkung beruht, wie noch zu zeigen sein wird, unter anderem auf der erfindungsgemäßen Kombination von Iridium und Platin in der ersten katalytischen Schicht.

Zudem wird durch die gezielte Auswahl eines temperaturstabilen Zeolithen vom Mordenit-Typ dafür Sorge getragen, daß das Alterungsverhalten des Katalysators positiv beeinfluß wird. Die Kombination der in den Zeolithen eingebrachten Nebengruppenmetalle Kupfer und Eisen führt weiterhin zu einer optimierten katalytischen Aktivität für die Umsetzung der Schadstoffe Kohlenmonoxid, Kohlenwasserstoffe und Stickoxide.

Zur Stabilisierung des $\gamma$-Aluminiumoxids kann Siliziumdioxid eingesetzt werden. Eine optimale Stabilisierungswirkung wird erzielt, wenn das Siliziumdioxid, bezogen auf $\gamma$-Aluminiumoxid, in einer Menge von mehr als 0,1 Gew.-%, bevorzugt 0,1 bis 15 Gew.-% und insbesondere 4,5 bis 11,5 Gew.-%, vorliegt.

Für die Erfindung sind Zeolithe vom Mordenit-Typ mit einem $SiO_2$ : $Al_2O_3$ Molverhältnis von über 8, bevorzugt 10 bis 50 und insbesondere 15 bis 30 besonders geeignet. Diese hohen $SiO_2$ : $Al_2O_3$ Molverhältnisse verleihen den Zeolithen eine gute Temperaturstabilität. Die Zeolithe können innerhalb ihrer Ionenaustauschkapazität mit den Nebengruppenelementen Kupfer und Eisen beladen sein. Besonders günstige Wirkungen auf die Aktivität des fertigen Katalysators ergeben sich bei einem Gesamtgehalt an Nebengruppenelementen, bezogen auf das Gewicht des Zeolithen, von 0,1 bis 13 Gew.-%, bevorzugt 1,0 bis 7,0 Gew.-%. Der Gehalt an Kupfer sollte dabei im Bereich zwischen 0,5 bis höchstens 5,5 Gew.-% und/oder der des Eisens mindestens 0,5 bis höchstens 7,5 Gew.-% betragen.

Die katalytischen Beschichtungen werden vorteilhafterweise auf monolithische, strukturverstärkende Körper in Honigwabenform aus Keramik oder Metall aufgebracht. Die Beschichtungsmenge sollte für die erste sowie die zweite Schicht jeweils 50 bis 150 g pro Liter Katalysatorvolumen betragen.

Eine zweite Aufgabe der Erfindung besteht in der Bereitstellung eines Verfahrens zur Stickoxidverminderung im mageren Abgas von Kraftfahrzeugmotoren. Diese Aufgabe wird dadurch gelöst, daß ein Katalysator nach einem der Ansprüche 1 bis 9 für die Abgasreinigung eingesetzt wird.

Die Erfindung wird nun anhand von Beispielen näher erläutert. Als Katalysatorkörper wurden Wabenkörper aus Cordierit mit 62 Zellen/cm² und einer Zellwandstärke von 0,17 mm eingesetzt.

Beispiel 1: Vergleichskatalysator VK1 gemäß dem Stand der Technik

Als Vergleichskatalysator VK1 wurde entsprechend der japanischen Offenlegungsschrift JP 1127044 ein Katalysatorkörper zunächst durch Eintauchen in eine wäßrige Suspension (25 % Feststoffgehalt) von $\gamma$-Aluminiumoxid (BET-Oberfläche 140 m²/g) mit einer hochoberflächigen Oxidschicht von 80 g/l Katalysatorvolumen belegt. Nach dem Trocknen des Katalysatorkörpers bei 120° C und einer 2-stündigen Kalzinierung bei 600° C wurde die Oxidschicht durch Tränken mit einer wäßrigen $PdCl_2$-Lösung imprägniert. Im Anschluß an eine 2-stündige Temperung an Luft bei 550° C erfolgte schließlich die Reduktion des Edelmetallsalzes im $H_2$-Strom ebenfalls bei 550° C für die Dauer von 3 Stunden. In einem weiteren Schritt wurde eine wäßrige Suspension eines H-Mordenits ($SiO_2/Al_2O_3$ Molverhältnis 25 : 1) aus 90 % H-Mordenit und 10 % eines Silica-Gels angefertigt.

Diese Suspension wurde in einer Menge von 80 g Feststoff/l Katalysatorvolumen auf die erste Schicht wiederum durch eine Tauchbeschichtung aufgezogen. Nach erneutem Trocknen bei 120° C und zweistündigem Kalzinieren bei 550° C wurde der H-Mordenit 24 Stunden in einer 0,02 mol/l Kupferacetatlösung mit Kupfer imprägniert und nochmals für 2 Stunden bei 300° C getrocknet.

Der so hergestellte Vergleichskatalysator VK1 war mit 1,76 g Palladium und 12,6 g Kupfer pro Liter Katalysatorvolumen belegt.

Beispiel 2: Erfindungsgemäßer Katalysator K1

Ein Katalysatorkörper wurde zunächst wie im Vergleichsbeisplel mit einer hochoberflächigen Aluminiumoxid-Schicht von 80 g/l Katalysatorvolumen belegt. Anschließend erfolgte die Trocknung bei 120° C und die Kalzinierung des Trägers bei 550° C für 2 Stunden jeweils an Luft. Danach wurde die Aluminiumoxid-Schicht mit Iridium und Platin im Gewichtsverhältnis 1 : 2 durch Tauchen in eine wäßrige Lösung aus $IrCl_3$ und $H_2PtCl_6$ imprägniert. Im Anschluß an eine zweistündige Kalzinierung bei 550° C an Luft erfolgte schließlich die Reduktion der auf dem Trägermaterial abgeschiedenen Edelmetallsalze im $H_2$-Strom bei einer Temperatur von 550° C für die Dauer von 3 Stunden.

In einem weiteren Schritt wurde auf die erste katalytische Schicht eine zweite aus einem Cu/Fe-Mordeniten in einer Menge von 80 g Cu/Fe-Mordenit pro Liter Katalysatorvolumen aufgezogen. Die Beschichtung erfolgte wieder durch Tauchen des Katalysatorkörpers in eine wäßrige Suspension von 95 % Cu/Fe-Mordenit mit 5 % Bentonit. Der Feststoffgehalt der Suspension betrug ca. 35 %. Anschließend wurde der Katalysator bei 120° C getrocknet und zwei Stunden bei 550° C kalziniert.

Die physikalisch-chemischen Daten des verwendeten Cu/Fe-Mordeniten können der Tabelle 1 entnommen werden.

Beispiel 3: Erfindungsgemäßer Katalysator K2

Der erfindungsgemäße Katalysator K2 wurde analog zum erfindungsgemäßen Katalysator K1 hergestellt. Im Unterschied zu Beispiel 2 wurden die Edelmetallkomponenten aber direkt der Aluminiumoxidsuspension zugegeben. Durch diese Maßnahme ist es möglich, auf die Zwischenkalzinierung zu verzichten.

Beispiel 4: Vergleichskatalysator VK2

Der Vergleichskatalysator VK2 wurde analog zum erfindungsgemäßen Katalysator K1 von Beispiel 2 hergestellt. Im Unterschied zum Beispiel 2 wurde als Edelmetallkomponente ausschließlich $H_2PtCl_6$ eingesetzt.

Beispiel 5: Vergleichskatalysator VK3

Der Vergleichskatalysator VK3 wurde ebenfalls analog zum erfindungsgemäßen Katalysator K1 von Beispiel 2 hergestellt. Im Unterschied zu Beispiel 2 wurde als Edelmetallkomponente ausschließlich $IrCl_3$ eingesetzt.

Beispiel 6: Erfindungsgemäßer Katalysator K3

Der erfindungsgemäße Katalysator K3 wurde ebenfalls analog zum erfindungsgemäßen Katalysator K1 von Beispiel 2 hergestellt. Im Unterschied zu Beispiel 2 wurden als Edelmetallkomponenten $IrCl_3$ und $H_2PtCl_6$ im Gewichtsverhältnis von 10 : 1 eingesetzt.

Beispiel 7: Erfindungsgemäßer Katalysator K4

Der erfindungsgemäße Katalysator K4 wurde ebenfalls analog zum erfindungsgemäßen Katalysator K1 von Beispiel 2 hergestellt. Im Unterschied zu Beispiel 2 wurden als Edelmetallkomponenten $IrCl_3$ und $H_2PtCl_6$ im Gewichtsverhältnis von 1 : 10 eingesetzt.

Beispiel 8: Erfindungsgemäßer Katalysator K5

Der erfindungsgemäße Katalysator K5 wurde ebenfalls analog zum erfindungsgemäßen Katalysator K1 von Beispiel 2 hergestellt. Im Unterschied zu Beispiel 2 wurde als Zeolith ein Mordenit mit einem Cu-Gehalt von 1,7 Gew.-% ohne Eisen eingesetzt.

4

Beispiel 9: Erfindungsgemäßer Katalysator K6

Der erfindungsgemäße Katalysator K6 wurde ebenfalls analog zum erfindungsgemäßen Katalysator K1 von Beispiel 2 hergestellt. Im Unterschied zu Beispiel 2 wurde als Zeolith ein Mordenit mit einem Fe-Gehalt von 1,5 Gew.-% ohne Kupfer eingesetzt.

Beispiel 10: Erfindungsgemäßer Katalysator K7

Der erfindungsgemäße Katalysator K7 wurde ebenfalls analog zum erfindungsgemäßen Katalysator K1 von Beispiel 2 hergestellt. Im Unterschied zu Beispiel 2 wurde in der ersten oxidischen Beschichtung ein mit 10 Gew.-% $SiO_2$ stabilisiertes Aluminiumoxid eingesetzt.

Beispiel 11: Erfindungsgemäßer Katalysator K8

Der erfindungsgemäße Katalysator K8 wurde ebenfalls analog zum erfindungsgemäßen Katalysator K1 von Beispiel 2 hergestellt. Im Unterschied zu Beispiel 2 wurde in der ersten oxidischen Beschichtung ein Ceroxid eingesetzt.

Die genaue Zusammensetzung der einzelnen Katalysatoren ist der Tabelle 2 zu entnehmen.

Beispiel 12: Aktivitätstest

Die katalytischen Aktivitäten der Abgasreinigungskatalysatoren gemäß den Beispielen 1 bis 11 wurden an einer Modellgas-Testanlage im Frischzustand sowie nach 16-stündiger Alterung bestimmt. Zur Alterung wurden die Katalysatoren in einem Ofen bei 750° C an Luft getempert.

Die für die Aktivitätstests verwendete Abgaszusammensetzung ist der Tabelle 3 zu entnehmen. Es handelt sich um ein mageres Abgas mit einem hohen Sauerstoff-Gehalt von 6 Vol.%. Die mittels Brettschneider-Formel berechnete Luftzahl Lambda beträgt für diese Abgaszusammensetzung 1,35.

Bei den Aktivitätstests wurde die Konversion von Kohlenmonoxid, Kohlenwasserstoffen und Stickoxiden als Funktion der Abgastemperatur vor den Katalysatoren bei Raumgeschwindigkeiten von 50 000 $h^{-1}$ gemessen.

Die Ergebnisse der Aktivitätstests sind in den Tabellen 4 und 5 zusammengefaßt. Aus ihnen ist ersichtlich, daß der erfindungsgemäße Katalysator K1 erhebliche Vorteile gegenüber dem Vergleichskatalysator VK1 aus dem Stand der Technik insbesondere in dem für Dieselmotoren und mager betriebenen Ottomotoren relevanten Abgastemperaturbereich von 225 bis 350° C hat. Diese Vorteile beschränken sich nicht nur auf die Konversion der Stickoxide $NO_x$, sondern zeigen sich auch bei der Konversion von Kohlenmonoxid CO und Kohlenwasserstoffen HC. Während der erfindungsgemäße Katalysator schon bei Abgastemperaturen von 225° C seine volle Konversionsleistung erreicht, zeigt der Vergleichskatalysator noch kaum Aktivität. Er erreicht erst bei 350° C in etwa das Leistungsniveau des erfindungsgemäßen Katalysators für die Schadstoffe CO und HC, während die Konversion von $NO_x$ noch weit hinter der des erfinderischen Katalysators zurückbleibt.

Diese hervorragenden Eigenschaften resultieren aus der erfindungsgemäßen Kombination der beiden Edelmetallkomponenten Iridium und Platin in der ersten katalytischen Schicht mit dem Cu/Fe-Mordenit der zweiten katalytischen Schicht.

Dabei zeigt die Kombination der Nebengruppenelemente Kupfer und Eisen ebenfalls signifikante Vorteile in bezug auf die Umsetzung der Schadstoffkomponenten Kohlenmonoxid, Kohlenwasserstoffe und Stickoxid.

Der Vergleichskatalysator VK2 mit einem ausschließlichen Platin-Gehalt der ersten katalytischen Schicht zeigt eine abnehmende Konversionsrate der Stickoxide mit steigender Abgastemperatur, der Vergleichskatalysator VK3 mit einem ausschließlichen Iridium-Gehalt in der ersten Schicht zeigt dagegen eine steigende Konversionsrate für Stickoxide mit steigender Abgastemperatur. Die Kombination bei der Edelmetallkomponenten in den erfinderischen Katalysatoren K1 bis K8 führt zu einer von der Abgastemperatur relativ unabhängigen hohen Konversionsrate für Stickoxide unter den gegebenen mageren Abgasbedingungen und machen ihn daher für die Abgasreinigung von Dieselmotoren und mager betriebenen Ottomotoren hervorragend geeignet.

Tabelle 1

| Physikalisch-chemische Daten des verwendeten Cu/Fe-Mordenits | | |
|---|---|---|
| Chemische Analyse: | $Na_2O$ | 0,49 Gew.-% |
| | $Al_2O_3$ | 5,4 Gew.-% |
| | $SiO_2$ | 74,0 Gew.-% |
| | $CuO$ | 1,1 Gew.-% |
| | $Fe_2O_3$ | 1,2 Gew.-% |
| Molverhältnis $SiO_2 : Al_2O_3$ | | 23,3 : 1 |
| Glühverlust (1000° C) | | 13 % |
| Zusatzstoffe | | 5 % Bentonit |
| Spez. Oberfläche | | 475 $m^2$/g |
| Mikroporenvolumen | | 0,21 ml/g |
| Mesoporenvolumen | | 0,03 ml/g |
| Makroporenvolumen | | 1,36 ml/g |
| Gesamtporenvolumen | | 1,60 ml/g |
| Mittlere Partikelgröße | | 11,8 $\mu$m |

Tabelle 2     Zusammensetzung der Katalysatoren

| Katalysator | 1. Schicht | | | | | | 2. Schicht | | |
|---|---|---|---|---|---|---|---|---|---|
| | $Al_2O_3$ (g/l) | $CeO_2$ (g/l) | $SiO_2$ (g/l) | Pd (g/l) | Pt (g/l) | Ir (g/l) | Zeolith (g/l) | Cu (g/l) | Fe (g/l) |
| VK 1 | 80 | - | - | 1,76 | - | - | 80 | 12,6 | - |
| K 1 | 80 | - | - | - | 1,17 | 0,59 | 80 | 0,88 | 0,96 |
| K 2 | 80 | - | - | - | 1,17 | 0,59 | 80 | 0,88 | 0,96 |
| VK 2 | 80 | - | - | - | 1,76 | - | 80 | 0,88 | 0,96 |
| VK 3 | 80 | - | - | - | - | 1,76 | 80 | 0,88 | 0,96 |
| K 3 | 80 | - | - | - | 0,16 | 1,60 | 80 | 0,88 | 0,96 |
| K 4 | 80 | - | - | - | 1,60 | 0,16 | 80 | 0,88 | 0,96 |
| K 5 | 80 | - | - | - | 1,17 | 0,59 | 80 | 1,36 | - |
| K 6 | 80 | - | - | - | 1,17 | 0,59 | 80 | - | 1,20 |
| K 7 | 72,0 | - | 8,0 | - | 1,17 | 0,59 | 80 | 0,88 | 0,96 |
| K 8 | - | 80 | - | - | 1,17 | 0,59 | 80 | 0,88 | 0,96 |

Tabelle 3

| Abgaszusammensetzung mit einer Luftzahl von 1,35 | |
|---|---|
| Abgaskomponenten | Konzentration |
| $CO_2$ | 10.7 [Vol.%] |
| $CO$ | 350 [ppm] |
| $H_2$ | 177.2 [ppm] |
| $NO$ | 270 [ppm] |
| $C_3H_6$ | 800 [ppm] |
| $O_2$ | 6 [Vol.%] |
| $H_2O$ | 10 [Vol.%] |
| $N_2$ | Balance |

Tabelle 4:    Schadstoffkonversion der frischen Katalysatoren

| Katalysator | Temperatur vor Katalysator | | | | | | | | | | | |
| | 225° C | | | 275° C | | | 325° C | | | 350° C | | |
| | CO | HC | $NO_x$ | CO | HC | $NO_x$ | CO | HC | $NO_x$ | CO | HC | $NO_x$ |
|---|---|---|---|---|---|---|---|---|---|---|---|---|
| VK 1 | 1 | 1 | 0 | 1 | 5 | 1 | 81 | 93 | 21 | 94 | 100 | 22 |
| K 1 | 93 | 49 | 35 | 97 | 100 | 40 | 96 | 100 | 41 | 97 | 100 | 34 |
| K 2 | 94 | 50 | 33 | 98 | 100 | 42 | 97 | 100 | 40 | 98 | 100 | 37 |
| VK 2 | 91 | 99 | 49 | 97 | 100 | 20 | 98 | 100 | 7 | 97 | 100 | 6 |
| VK 3 | 0 | 5 | 4 | 1 | 8 | 7 | 46 | 97 | 25 | 75 | 96 | 28 |
| K 3 | 41 | 3 | 2 | 73 | 55 | 14 | 97 | 100 | 17 | 97 | 100 | 10 |
| K 4 | 88 | 85 | 31 | 96 | 100 | 7 | 98 | 100 | 9 | 98 | 100 | 5 |
| K 5 | 67 | 24 | 17 | 85 | 89 | 24 | 94 | 99 | 17 | 95 | 100 | 18 |
| K 6 | 77 | 23 | 17 | 83 | 68 | 31 | 93 | 97 | 28 | 97 | 100 | 4 |
| K 7 | 93 | 99 | 77 | 97 | 100 | 26 | 98 | 100 | 20 | 100 | 100 | 17 |
| K 8 | 86 | 32 | 25 | 90 | 97 | 31 | 97 | 100 | 38 | 97 | 100 | 30 |

EP 0 559 021 B1

Tabelle 5: Schadstoffkonversion der gealterten (16 h, 750° C, an Luft) Katalysatoren

| Katalysator | Temperatur vor Katalysator | | | | | | | | | | | |
|---|---|---|---|---|---|---|---|---|---|---|---|---|
| | 225° C | | | 275° C | | | 325° C | | | 350° C | | |
| | CO | HC | NOx | CO | HC | NOx | CO | HC | NOx | CO | HC | NOx |
| VK 1 | 0 | 1 | 0 | 1 | 2 | 2 | 28 | 45 | 5 | 55 | 95 | 11 |
| K 1 | 91 | 45 | 25 | 95 | 98 | 30 | 96 | 100 | 17 | 97 | 100 | 17 |
| K 2 | 90 | 50 | 26 | 96 | 99 | 29 | 98 | 100 | 20 | 98 | 100 | 20 |
| VK 2 | 91 | 88 | 47 | 96 | 98 | 18 | 98 | 100 | 4 | 96 | 100 | 3 |
| VK 3 | 0 | 0 | 0 | 8 | 8 | 6 | 75 | 40 | 15 | 50 | 91 | 25 |
| K 3 | 34 | 3 | 0 | 61 | 35 | 8 | 89 | 98 | 7 | 93 | 98 | 10 |
| K 4 | 88 | 85 | 31 | 96 | 100 | 7 | 98 | 100 | 9 | 98 | 100 | 5 |
| K 5 | 70 | 19 | 8 | 85 | 59 | 18 | 96 | 99 | 14 | 97 | 100 | 11 |
| K 6 | 52 | 4 | 6 | 77 | 54 | 18 | 93 | 96 | 16 | 96 | 99 | 6 |
| K 7 | 89 | 92 | 67 | 98 | 100 | 22 | 96 | 100 | 17 | 100 | 100 | 12 |
| K 8 | 77 | 31 | 15 | 86 | 91 | 22 | 93 | 88 | 32 | 98 | 100 | 26 |

## Patentansprüche

1. Katalysator für die Stickoxidverminderung im mageren Abgas von Kraftfahrzeugmotoren enthaltend auf einem inerten strukturverstärkenden Körper eine erste katalytische Beschichtung aus einer Mischung eines hochoberflächigen, gegebenenfalls mit Seltenen Erdmetallen und/oder Siliziumdioxid, stabilisierten Aluminiumoxids und/oder eines Ceroxids als Träger für die katalytisch aktiven Edelmetallkompo-

EP 0 559 021 B1

nenten und auf der ersten Schicht eine zweite katalytische Beschichtung aus Zeolith,
**dadurch gekennzeichnet,**
daß die Edelmetallkomponenten der ersten katalytischen Schicht Iridium und Platin im Gewichtsverhältnis von 1 : 10 bis 10 : 1 sind und daß es sich bei dem Zeolithen um einen Kupfer und/oder Eisen enthaltenden, temperaturstabilen Zeolithen vom Mordenit-Typ handelt.

2. Katalysator nach Anspruch 1,
**dadurch gekennzeichnet,**
daß der $SiO_2$-Gesamtgehalt des stabilisierten Aluminiumoxids größer 0,1 Gew.-%, bevorzugt 0,1 - 15 Gew.-%, insbesondere 4,5 - 11,5 Gew.-% beträgt.

3. Katalysator nach den Ansprüchen 1 und 2,
**dadurch gekennzeichnet,**
daß der Zeolith vom Mordenit-Typ ein $SiO_2$ : $Al_2O_3$ Molverhältnis von über 8, bevorzugt 10 - 50, insbesondere 15 - 30 aufweist.

4. Katalysator nach den Ansprüchen 1 bis 3,
**dadurch gekennzeichnet,**
daß ein Zeolith eingesetzt wird, der innerhalb seiner Ionenaustauschkapazität mit den Nebengruppenelementen Kupfer und/oder Eisen beladen ist.

5. Katalysator nach Anspruch 4,
**dadurch gekennzeichnet,**
daß der verwendete Zeolith einen Gesamtgehalt an Nebengruppenmetallen von 0,1 - 13,0 Gew.-%, bevorzugt 1,0 - 7,5 Gew.-%, bezogen auf das Gewicht des Zeolithen, enthält.

6. Katalysator nach Anspruch 5,
**dadurch gekennzeichnet,**
daß der verwendete Zeolith mindestens 0,5 und höchstens 5,5 Gew.-% Kupfer, bezogen auf das Gewicht des Zeolithen, enthält.

7. Katalysator nach Anspruch 5,
**dadurch gekennzeichnet,**
daß der verwendete Zeolith mindestens 0,5 und höchstens 7,5 Gew.-% Eisen, bezogen auf das Gewicht des Zeolithen, enthält.

8. Katalysator nach den Ansprüchen 1 bis 7,
**dadurch gekennzeichnet,**
daß als strukturverstärkender Körper ein keramischer oder metallischer Träger, bevorzugt in monolithischer Wabenform (Trägerkatalysator), eingesetzt wird.

9. Katalysator nach Anspruch 8,
**dadurch gekennzeichnet,**
daß sowohl die erste als auch die zweite katalytische Beschichtung in einer Menge von jeweils 50 - 150 g pro Liter Katalysatorvolumen aufgebracht sind.

10. Verfahren zur Stickoxidverminderung im mageren Abgas von Kraftfahrzeugmotoren,
**dadurch gekennzeichnet,**
daß ein Katalysator nach einem der vorstehenden Ansprüche 1 bis 9 verwendet wird.

**Claims**

1. Catalyst for reducing the quantity of nitrogen oxide in lean exhaust gas from motor vehicle engines, containing on an inert, structurally reinforcing body, a first catalytic coating consisting of a mixture of an aluminium oxide and/or cerium oxide of large surface area optionally stabilised with rare earth metals and/or silicon dioxide as support for the catalytically active noble metal components and a second catalytic coating of zeolite on the first layer,
characterised in that

11

the noble metal components of the first catalytic layer are iridium and platinum in a ratio by weight of 1:10 to 10:1 and in that the zeolite is a temperature-stable zeolite of the mordenite type containing copper and/or iron.

2. Catalyst according to claim 1,
characterised in that
the total $SiO_2$ content of the stabilised aluminium oxide is greater than 0.1 wt.%, preferably 0.1 to 15 wt.%, in particular 4.5 to 11.5 wt.%.

3. Catalyst according to claims 1 and 2,
characterised in that
the zeolite of the mordenite type has an $SiO_2:Al_2O_3$ molar ratio of above 8, preferably of 10 to 50, in particular of 15 to 30.

4. Catalyst according to claims 1 to 3,
characterised in that
a zeolite is used which is loaded with the subgroup elements copper and/or iron within its ion exchange capacity.

5. Catalyst according to claim 4,
characterised in that
the zeolite used contains a total of 0.1 to 13.0 wt.%, preferably of 1.0 to 7.5 wt.% of subgroup metals, relative to the weight of the zeolite.

6. Catalyst according to claim 5,
characterised in that
the zeolite used contains at least 0.5 wt.% and at most 5.5 wt.% of copper, relative to the weight of the zeolite.

7. Catalyst according to claim 5,
characterised in that
the zeolite used contains at least 0.5 wt.% and at most 7.5 wt.% of iron, relative to the weight of the zeolite.

8. Catalyst according to claims 1 to 7,
characterised in that
the structurally reinforcing body used is a ceramic or metallic support, preferably in monolithic honeycomb form (supported catalyst).

9. Catalyst according to claim 8,
characterised in that
both the first and the second catalytic coatings are each applied in a quantity of 50 to 150 g per litre of catalyst volume.

10. Process for reducing the quantity of nitrogen oxides in lean exhaust gas from motor vehicle engines,
characterised in that
a catalyst according to one of the preceding claims 1 to 9 is used.

**Revendications**

1. Catalyseur pour la diminution des oxydes d'azote dans des gaz d'échappement pauvres de moteurs de véhicules automobiles contenant sur un corps inerte renforçant la structure un premier revêtement catalytique constitué d'un mélange d'un oxyde d'aluminium et/ou d'un oxyde de cérium hautement superficiel, stabilisé éventuellement avec des métaux de terres rares et/ou du dioxyde de silicium comme support pour les composants des métaux nobles catalytiquement actifs et sur la première couche un deuxième revêtement catalytique en zéolite, caractérisé en ce que, les composants de métaux nobles de la première couche catalytique iridium et platine sont dans un rapport de poids de 1:10 à 10:1 et en ce qu'il s'agit dans le cas de la zéolite d'une zéolite de type mordénite contenant du cuivre et/ou du fer, résistant thermiquement.

2. Catalyseur selon la revendication 1, caractérisé en ce que, la teneur totale en $SiO_2$ de l'oxyde d'aluminium stabilisé est supérieure à 0,1 % en poids, de préférence entre 0,1 et 15 % en poids, en particulier de 4,5 à 11,5 % en poids.

3. Catalyseur selon les revendications 1 et 2, caractérisé en ce que la zéolite du type mordénite a un rapport molaire $SiO_2 : Al_2O_3$ de plus de 8, de préférence de 10-50, en particulier de 15-30.

4. Catalyseur selon les revendications 1 à 3, caractérisé en ce qu'on met en oeuvre une zéolite, qui est chargée à l'intérieur de sa capacité d'échange ionique par les éléments des groupes associés cuivre et/ou fer.

5. Catalyseur selon la revendication 1, caractérisé en ce que la zéolite utilisée contient une teneur totale en métaux des groupes associés de 0,1 à 13,0 % en poids, de préférence de 1,0 à 7,5 % en poids, par rapport au poids de la zéolite.

6. Catalyseur selon la revendications 5, caractérisé en ce que la zéolite utilisée contient au moins 0,5 et au plus 5,5 % en poids de cuivre, par rapport au poids de la zéolite.

7. Catalyseur selon la revendications 5, caractérisé en ce que la zéolite utilisée contient au moins 0,5 et au plus 7,5 % en poids de fer, par rapport au poids de la zéolite.

8. Catalyseur selon les revendications 1 à 7, caractérisé en ce que, comme corps renforçant la structure, on met en oeuvre un support céramique ou métallique, de préférence sous la forme d'un nid d'abeille monolithique (catalyseur support).

9. Catalyseur selon la revendication 8, caractérisé en ce qu'on applique aussi bien le premier que le deuxième revêtement catalytique en une quantité respectivement de 50 à 150 g par litre de volume de catalyseur.

10. Procédé de réduction des oxydes d'azote dans des gaz d'échappement pauvres de moteurs de véhicules automobiles, caractérisé en ce qu'on utilise un catalyseur selon une des revendications précédentes 1 à 9.